# EUROPÄISCHE PATENTSCHRIFT

(11) **EP 3 396 095 B1**
(45) Veröffentlichungstag und Bekanntmachung des Hinweises auf die Patenterteilung: **12.02.2020**
(21) Anmeldenummer: 18161616.0
(22) Anmeldetag: 13.03.2018
(51) Int. Cl.: E05F 11/04, E05F 11/06, F16G 13/04, F16G 13/08, F16G 13/20

(54) **MIT EINEM KETTENANTRIEB BETÄTIGBARE RÜCKENSTEIFE SCHUBKETTE**
PUSH RESISTANT THRUST CHAIN ACTUATED WITH CHAIN TRANSMISSION
CHAÎNE DE POUSSÉE RIGIDE À ACTIONNEMENT PAR UN ENTRAÎNEMENT À CHAÎNE

(30) Priorität: 14.03.2017 DE 202017101466 U
(43) Veröffentlichungstag der Anmeldung: 31.10.2018
(73) Patentinhaber: K+G Pneumatik GmbH, 52249 Eschweiler (DE)
(72) Erfinder: KOHLER, Franz, 52249 Eschweiler (DE); MAUL, Hans-Erich, 52068 Aachen (DE)
(74) Vertreter: Tergau & Walkenhorst Patentanwälte PartGmbB

(56) Entgegenhaltungen:
- DE-U1-202014 009 371
- GB-A- 1 534 726
- US-A1- 2009 042 683

## Beschreibung

Die Erfindung betrifft eine mit einem Kettenantrieb betätigbare Schubkette.

Solche Schubketten sind dafür vorgesehen, Schubkräfte linear möglichst ohne aufwendige Führung zu übertragen, wobei ein Abknicken der Schubkette in einer Richtung quer zu der linearen Schubrichtung vermieden werden soll. Jedoch sollen solche Schubketten in entgegengesetzter Querrichtung abgewinkelt werden, um in einer anderen linearen Schubrichtung zu verlaufen und/oder in ein antreibendes Kettenrad einzugreifen.

Derartige Schubketten werden beispielsweise zur Betätigung von Fenstern, Türen sowie Klappen und Lichtkuppeln, insbesondere in RWA-Anlagen in Gebäuden, eingesetzt.

Zum Stand der Technik solcher Schubketten beziehungsweise Kettenglieder, aus denen sie bestehen, gehören Entwicklungsvorschläge, vor allem um die Herstellung zu rationalisieren und gute funktionelle Eigenschaften, wie die Übertragung großer Schubkräfte, geringerer Gefahr eines unbeabsichtigten Auslenkens der Schubkette, geräuschlosen Antrieb und kompakte Ausbildung eines die Schubkette aufnehmenden Gehäuses zu realisieren.

Zur Verwendung in zumindest teilweise ungeführten Schubkettenantrieben wurden nach dem Stand der Technik in der Schubkette jeweils zwei verschiedene aufeinanderfolgende Kettenglieder eingesetzt, die mittels Bolzen als Verbindungselemente miteinander verbunden sind (EP 0936378A1). Von den abwechselnd aufeinander folgenden Kettengliedern der Schubkette ist jeweils eines als U-förmiger Bügel und eines als ebene Innenlasche ausgebildet, die mit dem U-förmigen Bügel zusammenwirkt. Der U-förmige Bügel weist in Kantenbereichen Abrundungen auf, die es gestatten sollen, eine Drehbewegung der Schubkette um ein Kettenrad hindernisfrei ohne großen Einbauraum zu ermöglichen. Die Herstellung der Schubkette mit solchen Schubkettengliedern ist jedoch in Relation zu ihren Betriebseigenschaften wie Schubbelastbarkeit ohne Ausknickgefahr und Geräuschentwicklung verhältnismäßig aufwendig.

Es wurde auch eine Schubkette mit Kettengliedern vorgeschlagen, die kein U-förmig gebogenes Teil aufweisen, sondern vorzugsweise jeweils zwei Außenlaschen, Innenlaschen, Bolzen, Hülsen und Rollen (DE 20 2012 001 762 U1). Die beiden Außenlaschen eines Kettenglieds und die zu benachbarten Kettengliedern reichenden Innenlaschen sind symmetrisch zu einer mittleren Symmetrielinie in Längsrichtung der gestreckten Kette angeordnet, wobei die Innenlaschen eines Kettenglieds und die auf innen aufliegenden Außenlaschen durch die Hülse beziehungsweise Rolle sowie durch den die Hülse und Rolle aufnehmenden Bolzen auf Abstand gehalten werden. Die Innenlaschen jeweils eines Paares sind auf einer Seite nach außen zu den Außenlaschen abgewinkelt und können sich so jeweils an Stirnseiten einer rückenartigen Erhebung der Außenlaschen von zwei benachbarten Kettengliedern in dem linearen Bereich der Schubkette gegenseitig abstützen. Allerdings sind die Abstützflächen durch die Materialdicke der Außenlasche und der Innenlasche begrenzt, was die übertragbare Schubkraft beziehungsweise den Schutz gegen ein Abknicken aufeinander folgender Kettenglieder begrenzt.

In Verbindung mit der voranstehenden Schubkette ist ein Kettenantrieb für einen Stellantrieb zum automatischen Öffnen und Schließen einer Lüftungsanordnung offenbart, die eine Führungsanordnung zum Führen der Kette und eine Getriebeanordnung mit einem Antriebsritzel aufweist. Das Antriebsritzel greift in die an der Führungsanordnung geführte Kette ein. Die Getriebeanordnung soll selbsthemmend ausgeführt sein und weist hierzu eine Schnecke auf, die in ein Schneckenrad eingreift. Das Schneckenrad und das Antriebsritzel sind koaxial zueinander angeordnet und zum direkten Antrieb des Antriebsritzels der Schubkette über das Schneckenrad und die Schnecke drehfest miteinander in Verbindung stehen. Da die Untersetzung der Drehzahl eines Motorritzels zu derjenigen des Antriebsritzels der Schubkette im Wesentlichen an dem Schneckenrad und der Schnecke mit kleiner Steigung erfolgt, ist an den beiden letztgenannten Getriebeelementen mit einem verhältnismäßig hohen Verschleiß zu rechnen.

Eine Schubkette mit den Merkmalen des Oberbegriffs von Anspruch 1 ist aus GB 1 534 726 A bekannt.

Der Erfindung liegt die Aufgabe zugrunde, eine mit einem Kettenantrieb betätigbare rückensteife Schubkette vorzuschlagen, deren Kettenglieder durch sehr gute Anpassung der Gliederform an das Antriebsrad der Schubkette reibungsarm wirken und einen gleichmäßigen Rundlauf bei Umlenkung der Schubkette über das Antriebsrad und darüber hinaus aus dem Gehäuse zu realisieren. Damit soll ein hoher Gesamtwirkungsgrad erreicht werden. Bei Übertragung von Schubkräften soll die Schubkette in ihrem geradlinigen Bereich besonders knicksteif sein. Auch soll es möglich sein, die Schubkette sowohl an einer Längsseite als auch an einer Stirnseite eines Antriebsgehäuses mit nur einem Antriebsrad auszufahren. Nicht zuletzt soll die Schubkette insbesondere bei Fertigung verschieden leistungsfähiger Varianten herstellungsgünstig sein.

Zur Lösung dieser Aufgabe umfasst die Schubkette sandwichartig zusammengesetzte Kettenglieder, deren flaches Innenteil jeweils ein Scheibenpaket aus wenigstens zwei formgleichen, bündig angeordneten Scheiben umfasst. Zur guten Führung der Zugkette durch ein Antriebsgehäuse sind die Scheiben, die das Innenteil des Kettenglieds bilden, als Kreisscheibensegment mit einem kreisabschnittsförmigen, von einem spitzen Rastnocken und einer kongruenten Rastvertiefung begrenzten Außenrand und einem eingebuchteten Innenrand geformt. Zwischen dem Außenrand und dem Innenrand jeder Scheibe sind neben der Einbuchtung des Innenrands zwei Bolzenaufnahmelöcher ausgeformt, um mit von diesen aufgenommenen Bolzen das Innenteil in dem Kettenglied zu fixieren. Jeder der beiden Bolzen ist außerdem geeignet, in jeweils ein Bolzenaufnahmeloch von zu den Scheiben des vorgenannten Scheibenpakets formgleiche, ebenfalls bündig angeordnete Scheiben eines seitlich benachbarten Scheibenpakets schwenkbar einzugreifen. Mit dem formgleichen Scheiben der Scheibenpakete der Innenteile sind die Kettenglieder fertigungsgünstig insoweit gleich ausgebildet.

Ein derartiges Kettenglied kann weiter fertigungsgünstig an größere zulässige Schubkräfte dadurch angepasst werden, dass die beiden formgleichen Scheiben des Innenteils mit einer solchen dritten Scheibe oder mehr Scheiben ergänzt werden.

Eine angenähert runde Form des Rückenbereichs des Kettenglieds wird durch Formgebung der Scheiben als Kreisscheibensegmente mit einem kreisabschnittsförmigen, von jeweils einem spitzen Rastnocken und einer kongruenten Rastvertiefung begrenzten Außenrand erreicht.

Die Kreisscheibensegmente bzw. Scheiben sind weiterhin gemäß Anspruch 2 dergestalt ausgebildet, dass der Außenrand und der eingebuchtete Innenrand der Scheiben zahnförmige, nach innen gerichtete Vorsprünge mit Evolventenkontur einschließen, in denen jeweils eines der Bolzenaufnahmelöcher ausgeformt ist. Zwischen die beiden zahnförmigen Vorsprünge mit Evolventenkontur kann ein geeignet ausgebildetes Kettenantriebsrad zur Betätigung der Schubkette reibungsarm eingreifen, das weiter unten angegeben ist.

Gemäß Anspruch 3 sind die Rastvertiefungen jeweils an einem Ende des Außenrands der Kreisscheibensegmente bzw. der Scheiben eines Scheibenpakets geeignet, einen spitzen Rastnocken der Scheiben eines fluchtend benachbarten Scheibenpakets aufzunehmen. Durch den spitzen Rastnocken an einem Ende des Außenrands des Kreisscheibensegments jeder Scheibe und die kongruente Rastvertiefung mit in Seitenansicht V-Form an dem anderen Ende des Außenrands des fluchtend benachbarten Kreisscheibensegments wird die Sicherheit gegen unbeabsichtigtes Abknicken der Schubkette erhöht, ohne eine geführte Umlenkung der Schubkette quer zur Schubrichtung, insbesondere an einem die Schubkette antreibenden Kettenrad, zu behindern.

Bei gerader Ausrichtung der Schubkette nach Anspruch 4 liegen jeweils zwei Anlageflächen eines dreieckig ausgebildeten spitzen Rastnockens eines Scheibenpakets an zwei Anlagenflächen der kongruenten Rastvertiefung in V-Form eines fluchtend benachbarten Scheibenpakets an.

In der Schubkette nach Anspruch 5 sind die Scheibenpakete aufeinander folgender Kettenglieder unsymmetrisch zu einer Mittellinie in Schubrichtung der Schubkette jeweils abwechselnd an einer ersten Längsseite und an einer dieser gegenüberliegenden Längsseite der Schubkette angeordnet, so dass die in dieser Weise versetzt angeordneten Scheibenpakete sich an deren Endabschnitten überlappen. Die Endabschnitte sind über einen gemeinsamen Bolzen schwenkbar miteinander verbunden. Dies ergibt eine kompakte Schubkette, deren Querschnitt zur Übertragung der Schubkraft oder Zugkraft wirksam genutzt wird.

Zur erhöhten zulässigen Zugkraftübertragung können nach Anspruch 6 jeweils zwei an einer der beiden Längsseiten der Schubkette fluchtend aufeinander folgende Endabschnitte der Scheibenpakete über einen laschenförmigen Kettenzuganker um die Bolzen durch die aufeinander folgenden Endabschnitte schwenkbar miteinander verbunden sein.

Fertigungsgünstig ist nach Anspruch 7 der Kettenzuganker als flache Lasche mit zwei abgerundeten Endabschnitten ausgebildet, in denen jeweils ein Bolzenaufnahmeloch ausgeformt ist, das mit einer Reihe Bolzenaufnahmelöcher des Scheibenpakets fluchten kann.

Bevorzugt können zur Symmetrierung der Schubkraftübertragung an beiden Längsseiten der Schubkette jeweils Endabschnitte von zwei Kettenzugankern parallel zueinander außen seitlich anliegen.

Erfindungsgemäß ist über zwei benachbarten Endabschnitten von zwei aufeinander folgenden Kettenzugankern an wenigstens einer Längsseite der Schubkette eine Kettenwinkellasche mit einem abgewinkelten Steg angeordnet, die mittels der Bolzen in den Kettenzugankern so gehalten wird, dass sich bei gestreckter Schubkette Rücken der Kettenzuganker an dem Steg der Kettenwinkellasche abstützen. Diese Maßnahme dient der Sicherung der Schubkette gegen Ausknicken bei starker Schubbeanspruchung. Die Kettenwinkellasche mit dem abgewinkelten Steg stellt ein zusätzliches Außenteil der Schubkette dar und ist das einzige nicht ebene Element der fertigungsgünstigen Schubkette aus flachen Elementen.

Die sehr gute Anpassung der Gliederform der Schubkette nach Anspruch 2 an das in dem Kettenantrieb abtriebsseitig angeordnete Kettenrad erfolgt vorteilhafterweise dadurch, dass die Zähne bzw. Vorsprünge des Kettenrads im Wesentlichen zylindrisch geformt sind. Die zylindrischen Zähne gleiten reibungsarm an den radial nach innen gerichteten Vorsprüngen mit Evolventenkontur der Scheiben des Innenteils der Kettenglieder bei deren Umlenkung durch das Kettenrad, wodurch ein ruhiger Lauf und ein hoher Gesamtwirkungsgrad erreicht werden.

Besonders fertigungsgünstig kann das obige Kettenrad mit den zylindrischen Zähnen bzw. Vorsprüngen im Wesentlichen einstückig geformt sein.

Mit einer Variante des Kettenrads mit Zähnen, an dessen Endabschnitten Rollen einzeln drehbar gelagert sind, wird eine besonders hohe Effizienz erreicht, weil die Rollen zwischen den zahnförmigen Vorsprüngen mit Evolventenkontur der Scheiben bzw. Scheibenpakete abrollen können.

Weiterhin kann vorteilhaft der Kettenantrieb mit einem Elektromotor mit einem Antriebsritzel, das in ein untersetzendes Zahnrad eingreift, mit einer schräg verzahnten Evoloidstufe ausgebildet sein, um besonders geringe Abrollverluste des Antriebsritzels an dem Zahnrad und einen ruhigen Antrieb zu erzielen.

Ein kompakter Kettenantrieb, der sich raumgünstig in ein gerade gestrecktes Kettenantriebsgehäuse einfügen lässt, kann in Kraftflussrichtung den Elektromotor mit dem Antriebsritzel und dem in dieses eingreifenden untersetzende Zahnrad als Evoloidstufe, eine von diesem angetriebene Schnecke, die in ein Schneckenrad eingreift, wenigstens eine von diesem angetriebene weitere untersetzende Zahnradstufe, ein Zwischenrad und ein erstes in dieses eingreifendes, das Kettenrad bzw. Rollenrad antreibendes Zahnrad aufweisen. Ein solcher teilweise unsymmetrischer Aufbau des Kettenantriebs kann herstellungsgünstig realisiert werden.

Es ist möglich, den vorstehenden unsymmetrischen Aufbau zu einem symmetrischen Aufbau für eine gleichmäßige Lagerbelastung und höhere Beanspruchungen abzuwandeln, indem das das Kettenrad bzw. Rollenrad antreibende erste Zahnrad mit einem zweiten gleichachsigen Zahnrad zu einem Zwillingszahnrad ergänzt ist, wobei das erste und das zweite Zahnrad das Kettenrad symmetrisch zwischen sich einschließen und wobei in das Zwillingszahnrad, welches das Kettenrad antreibt, ein weiteres Zwillingszahnrad eingreift, welches mit dem Antriebsmotor getriebetechnisch in Verbindung steht.

Nachfolgend wird die Erfindung anhand eines Ausführungsbeispiels der Schubkette sowie mehrerer Varianten des Kettenantriebs, die an die Schubkette angepasst sind, erläutert. Es zeigen:
- Fig. 1: eine schaubildliche Darstellung eines Abschnitts der Schubkette mit mehreren Kettengliedern,
- Fig. 2: den Schubkettenabschnitt gemäß Fig. 1 in einer Seitenansicht,
- Fig. 3: den Kettenabschnitt gemäß den Fig. 1 und Fig. 2 in einer Draufsicht,
- Fig. 4: den Kettenabschnitt gemäß den Fig. 1 bis Fig. 3 in einer Ansicht von vorne,
- Fig. 5: eine Seitenansicht einer Scheibe eines Innenteils eines Kettenglieds in größerer Darstellung,
- Fig. 5a: eine schaubildliche Ansicht auf die Scheibe gemäß Fig. 5 in kleinerer Darstellung,
- Fig. 6: eine Seitenansicht auf einen Kettenzuganker,
- Fig. 7: eine Seitenansicht auf eine Kettenwinkellasche,
- Fig. 8: einen Schnitt durch die Kettenwinkellasche in einer Schnittebene A-A in Fig. 7,
- Fig. 9: einen Gesamtaufbau eines Kettenantriebs ohne Gehäuse zum Antrieb einer Schubkette gemäß den Fig. 1 bis Fig. 8,
- Fig. 10: einen erweiterten Gesamtaufbau eines Kettenantriebs ausgehend von dem Kettenantrieb gemäß Fig. 9, ebenfalls ohne Gehäuse, in einer schaubildlichen Darstellung,
- Fig. 11: einen Endabschnitt des Gesamtaufbaus nach Fig. 10, jedoch mit einer Kettenantriebsgehäusehälfte und umgelenkter Schubkette in schaubildlicher Ansicht,
- Fig. 12: eine Einzelheit des Kettenantriebs gemäß Fig. 9 oder Fig. 10 in dem Abschnitt mit einem Elektromotor in einer Ansicht von vorne,
- Fig. 13: eine schaubildliche Ansicht auf ein Kettenrad, welches als Rollenrad ausgebildet ist,
- Fig. 14: eine vereinfachte Ausführungsform des Kettenrads mit im Wesentlichen zylindrischen Zähnen und
- Fig. 15: eine schaubildliche Darstellung auf einen Abschnitt der Schubkette in einem Umlenkbereich ohne Darstellung des Kettenrads.

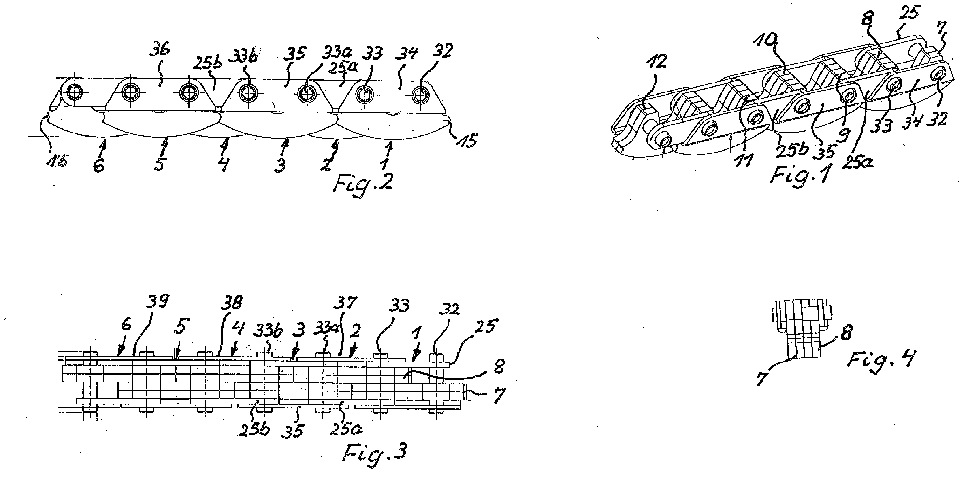

In den Fig. 1 bis Fig. 4 ist ein Abschnitt einer rückensteifen Schubkette in einem gestreckten Zustand dargestellt, welche die Kettenglieder 1 bis 6 umfasst. Die sandwichartig zusammengesetzten Kettenglieder weisen jeweils als Innenteil ein Scheibenpaket 7 bis 12 auf, wie aus den Fig. 1 bis Fig. 4 insbesondere in Zusammenschau ersichtlich. Die Scheibenpakete 7 bis 12 sind jeweils aus zwei formgleichen, bündig gestapelten Scheiben aufgebaut.

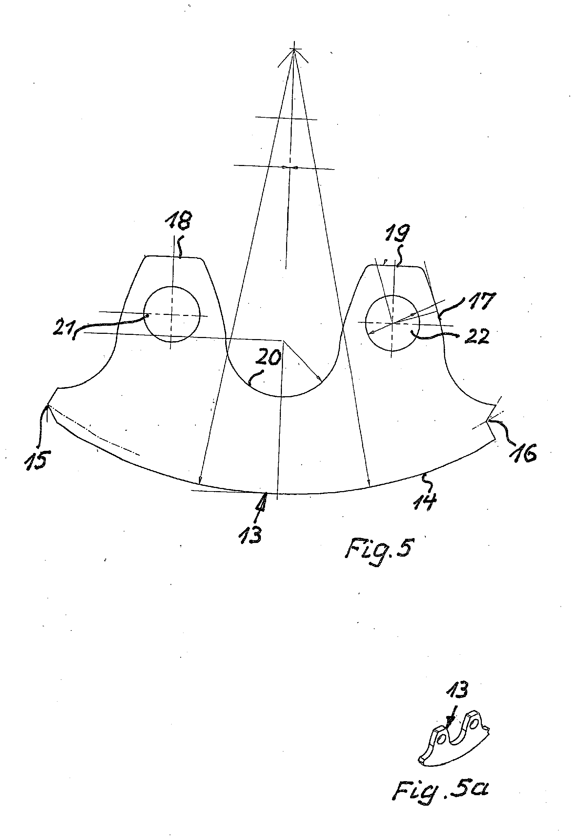

Eine solche Scheibe 13 ist in Fig. 5 in einer vergrößerten Seitenansicht dargestellt und in Fig. 5a als kleinere schaubildliche Ansicht. Die Form der Scheibe 13 geht aus einem angenäherten Kreissegment hervor, dessen kreisabschnittsförmiger Außenrand 14 einerseits von einem spitzen Rastnocken 15 und andererseits von einer zu dem Rastnocken kongruenten Rastvertiefung 16 begrenzt ist, wo der Außenrand 14 jeweils in einen Innenrand 17 übergeht. Der Innenrand definiert zwei zahnförmige, radial nach innen gerichtete Vorsprünge 18, 19 mit Evolventenkontur, die eine Einbuchtung 20 einschließen. Der in Fig. 5 untere Teil der Einbuchtung 20 ist als Halbkreis geformt.

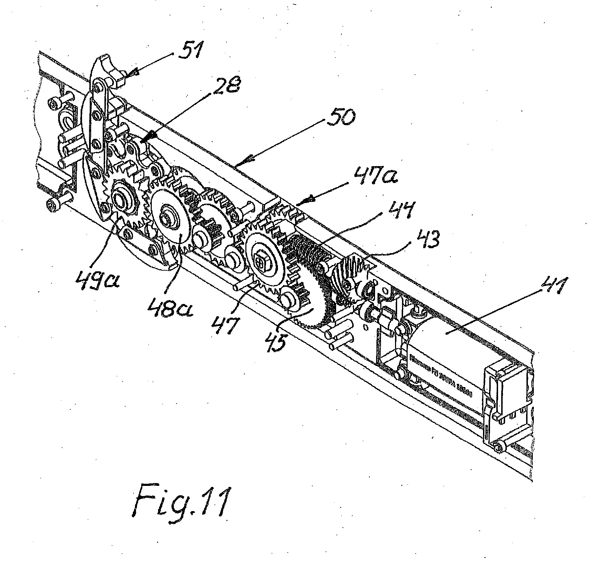

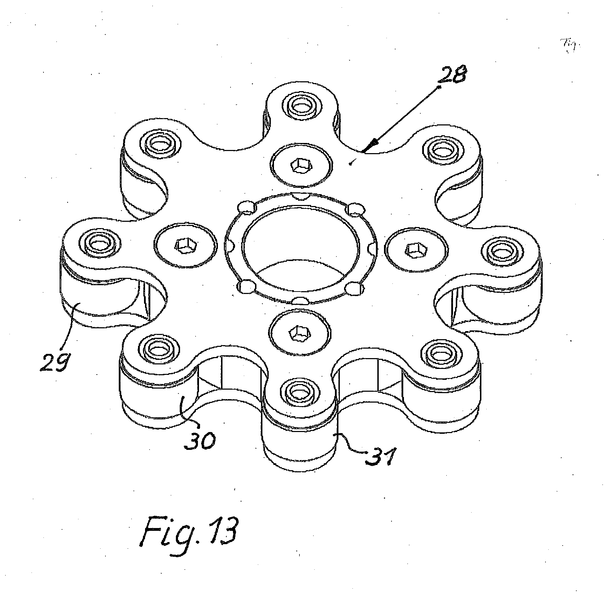

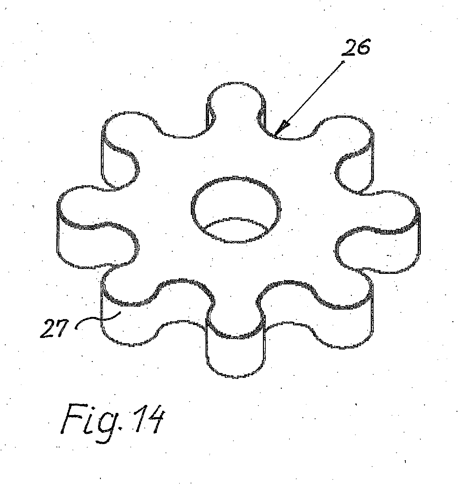

Die Form der Scheibe 13 mit den beiden zahnförmigen Vorsprüngen 18 , 19 und der Einbuchtung 20 kann günstig an ein Antriebsrad der Schubkette bzw. ein Kettenrad 26 angepasst sein, indem Zähne 27 eines solchen Kettenrads an ihren Enden einstückig zylindrisch ausgebildet sind, siehe Fig. 14. Um einen höheren Wirkungsgrad zu erreichen, sind alternativ in Endabschnitten der Zähne des in Fig. 13 gezeigten Kettenrads 28 Rollen, z. B. 29, 30 , 31 , drehbar gelagert. Wie weiter oben erwähnt ist damit ein sehr gleichmäßiger Kettenlauf mit geringer Reibung bei der Umlenkung der Schubkette über das Kettenrad 28 und darüber hinaus aus dem Kettenantriebsgehäuse 50, siehe Fig. 11, realisierbar.

In den zahnförmigen Vorsprüngen 18, 19 jeder Scheibe 13 gemäß Fig. 5 sind jeweils zwei Bolzenaufnahmelöcher 21, 22 ausgeformt, die zum bündigen Zusammensetzen eines Scheibenpakets sowie zu dessen Verbindung mit einem Abschnitt eines seitlich benachbarten Scheibenpakets und ggf. mit weiteren äußeren Schubkettenelementen je einen Bolzen als Verbindungselement aufnehmen. Solche Bolzen des ersten Kettenglieds 1 sind in den Fig. 1 bis Fig. 3 mit 32 , 33 bezeichnet. Die Passung der Bolzen 32, 33 in den Bolzenaufnahmelöchern ist so dimensioniert, dass zueinander seitlich benachbarte Scheibenpakete, insbesondere an dem umlenkenden Kettenrad gegeneinander geschwenkt werden können.

Dabei gelangen die in den Fig. 2 und Fig. 5 in Seitenansicht dargestellten dreieckigen Rastnocken 15 der Scheiben 13 eines Scheibenpakets, z. B. 7 , die bei gerader Schubkette zur Schubübertragung in die Rastvertiefungen 16 der Scheiben 13 eines fluchtend benachbarten Scheibenpakets eingreifen, außer Eingriff.

Durch die kreisabschnittsförmige Gestaltung des Außenrands 14 der Scheiben 13 , aus denen die Scheibenpakete 7 bis 12 der Innenteile der Kettenglieder 1 bis 6 bestehen, werden eine reibungsarme Führung der Kettenglieder in einen Kettenkanal und an der Antriebsstelle mit dem umlenkenden Kettenrad 28 ein nur geringer Raumbedarf erreicht.

Wie insbesondere die Fig. 3 und Fig. 4 zeigen, ist jeweils ein Scheibenpaket, zum Beispiel 7 , mit dem nächsten fluchtend benachbarten Scheibenpaket 9 über ein zu diesem seitlich versetztes überlappendes Scheibenpaket 8 verbunden, das ebenfalls aus formgleichen Scheiben 13 besteht. In der Schubkette wechseln also Scheibenpakete an einer Längsseite der Schubkette mit Scheibenpaketen an der anderen Längsseite zueinander ab, die jeweils über einen Bolzen durch überlappende Abschnitte zweier Scheibenpakete miteinander in Verbindung stehen. Die in dieser Weise aufeinanderfolgenden Scheibenpakete übertragen Zugkräfte über die sie verbindenden Bolzen, z. B. 33, und Schub. Die jeweils fluchtend benachbarten Scheibenpakete, z. B. 7, 9, übertragen über ihre Stirnseiten auch direkt Schubkräfte bzw. Druckkräfte.

Zur verbesserten Übertragung von Zugkräften kann zumindest an der Außenseite des Kettenglieds 1 , die dem Scheibenpaket 7 des Kettenglieds außen gegenüberliegt, ein flacher Kettenzuganker 25 parallel zu dem Scheibenpaket 7 mittels dessen beiden Bolzen 32 , 33 angebracht sein, siehe Fig. 1. Damit wird insbesondere eine Symmetrierung der Zugkraftübertragung erreicht.

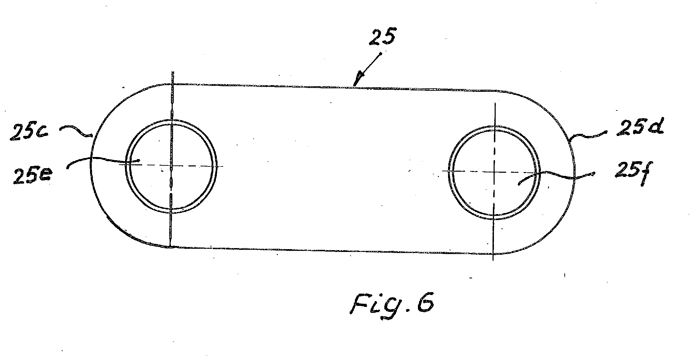

In den Fig. 1 und Fig. 3 sind weitere Kettenzuganker 25a , 25b dargestellt. Fig. 6 zeigt die einfache Laschenform des Kettenzugankers 25 mit abgerundeten Endabschnitten 25c , 25d und jeweils einem Bolzenaufnahmeloch 25e bzw. 25f. Der Kettenzuganker, z. B. 25 , stellt einen Außenteil des Kettenglieds, z. B. 1 , dar.

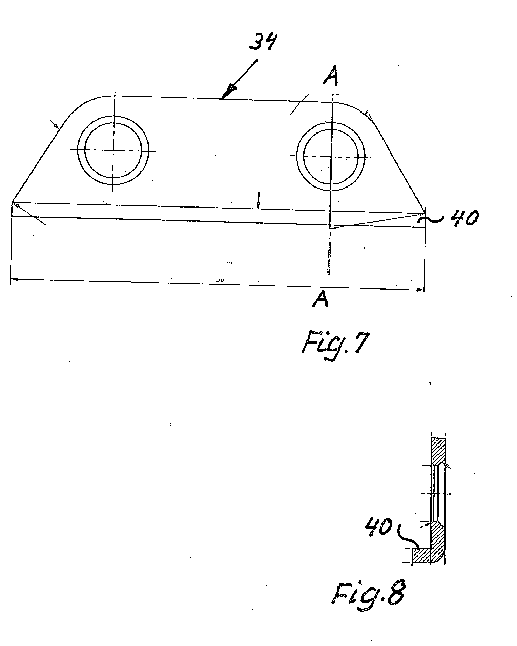

Ein weiteres einfach konzipiertes Außenteil der Schubkette ist jeweils eine der Kettenwinkellaschen 34 bis 39 gemäß den Fig. 1-Fig. 3. In den Fig. 7 und Fig. 8 ist eine Kettenwinkellasche 34 vergrößert dargestellt. Sie weist einen abgewinkelten Steg, z. B. 40 , auf und ist damit das einzige Element der Schubkette, das nicht völlig flach ist.

Wie insbesondere aus Fig. 1 und Fig. 3 ersichtlich, überdeckt jeweils eine Kettenwinkellasche, z. B. 35 , als äußerstes seitliches Element der Schubkette jeweils zwei Endabschnitte von auf einer Längsseite der Schubkette benachbarten Kettenzugankern 25a , 25b und sie wird durch die beiden Bolzen 33a , 33b des durchgängigen Scheibenpakets des Kettenglieds 3 so gehalten, dass sich bei gestreckter Schubkette in Fig. 2 Rücken der Kettenzuganker 25a , 25b an dem Steg der Kettenwinkellasche 35 abstützen. Damit wird ein weiterer wirksamer Schutz gegen Abknicken der auf Schub belasteten Schubkette in einer Richtung quer zum Schub erreicht, in der ein Abknicken nicht konstruktiv vorgegeben ist.

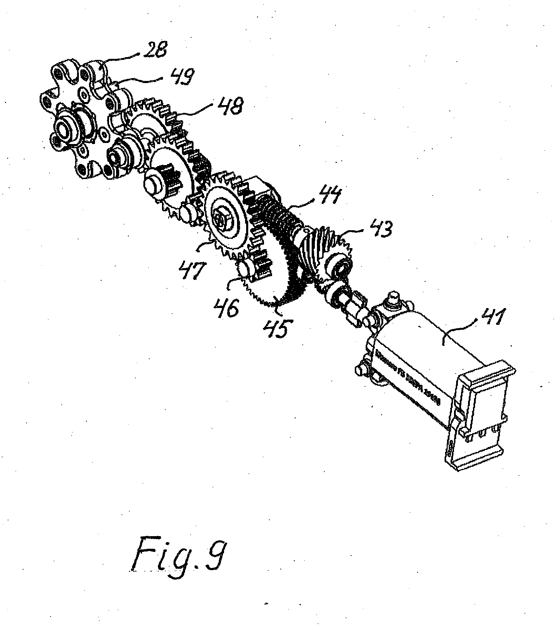

Im Folgenden werden anhand der Fig. 9 bis Fig. 15 Kettenantriebe erläutert, die sich durch jeweils ein abtriebsseitiges Kettenrad 28 auszeichnen, welches sich zum kraftverlustarmen Antrieb der Schubkette besonders eignet, deren Scheiben jeweils zwei zahnförmig, nach innen gerichtete Vorsprünge 18 , 19 mit Evolventenkontur, insbesondere gemäß Fig. 5 einschließen. Wie oben erwähnt greifen die Rollen, z. B. 29 bis 31 des Kettenrads 28 , zwischen die beiden zahnförmigen, nach innen gerichteten Vorsprünge 18 , 19 mit Evolventenkontur ein, wobei sie an der Evolventenkontur abrollen können.

In Fig. 9 ist der Gesamtaufbau eines solchen unsymmetrischen Kettenantriebs ohne Kettenantriebsgehäuse vereinfachend dargestellt. Das Kettenrad 28 mit den Rollen, z. B. 29 bis 31 gemäß Fig. 13 befindet sich in dem Gesamtaufbau gemäß Fig. 9 links oben und der antreibende Elektromotor 41 rechts unten.

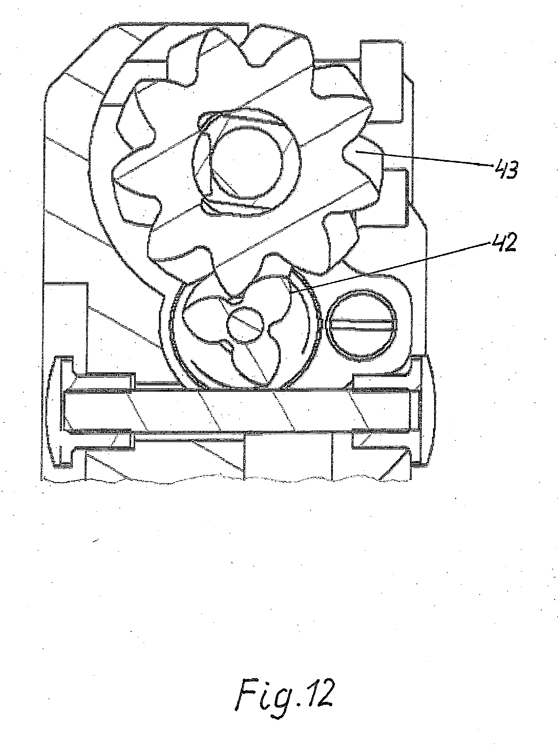

Wie weiter in Fig. 12 dargestellt, wird die hohe Drehzahl des Elektromotors zunächst über eine schrägverzahnte Evoloidstufe mit einem Evoloidantriebritzel 42 und einem Evoloidzahnrad 43 untersetzt. Die schrägverzahnte Evoloidstufe, in der das Evoloid reibungsarm abrollt, verursacht nur geringe Kraftverluste.

Gemäß Fig. 9 folgt auf das Evoloidzahnrad 43 eine gleichachsige, eingängige Schnecke 44 , die in ein Schneckenrad 45 eingreift. Das Übersetzungsverhältnis der Schnecke 44 und des Schneckenrads 45 können wegen der vorangehenden Drehzahluntersetzung in der Evoloidstufe so gewählt sein, dass auch hier die Reibungsverluste verhältnismäßig gering sind.

Der Kraftfluss in dem Kettenantrieb erfolgt anschließend über ein Ritzel 46 , welches gleichachsig mit dem Schneckenrad 45 angeordnet ist und in ein untersetzendes Zahnrad 47 eingreift, sowie weitere nicht bezeichnete Zahnräder zu einem ersten Zwischenrad 48 , welches in ein gleichachsig zu dem Kettenrad 28 angeordnetes, das Kettenrad antreibende Zahnrad 49 eingreift.

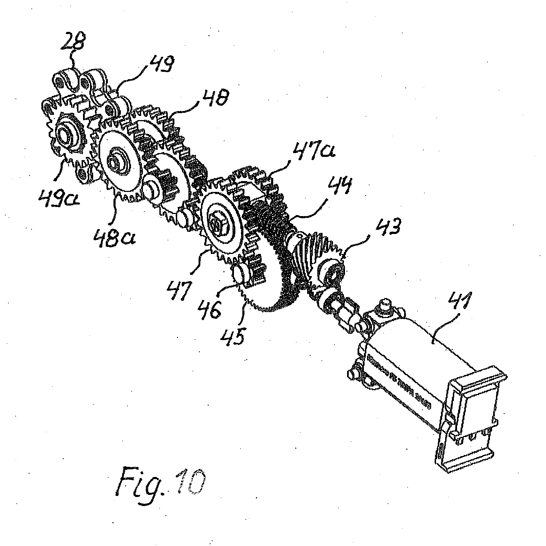

Aus Fig. 10 kann eine auf der unsymmetrisch ausgebildeten, fertigungsgünstigen gemäß Fig. 9 beruhende, zu einem symmetrischen Aufbau ergänzte Ausführungsform entnommen werden. Diese eignet sich zum Antrieb einer Schubkette mit besonders großer Schubkraft und belastet die Lager des Schubkettenantriebs gleichmäßig.

Mit der unsymmetrischen Ausführungsform übereinstimmende Elemente der symmetrischen Ausführungsform des Schubkettenantriebs sind mit gleichen Bezugszeichen versehen. In der symmetrischen Ausführungsform ist das erste Zahnrad 49 , das zum gleichachsigen Antrieb des Kettenrads 28 dient, mit einem zweiten gleichachsigen Zahnrad 49a zu einem Zwillingszahnrad ergänzt, welches das Kettenrad 28 symmetrisch einschließt. Dieses Zwillingszahnrad wird durch ein weiteres Zwillingszahnrad angetrieben, welches mit dem oben genannten ersten Zwischenzahnrad 48 und einem zweiten gleichachsigen Zwischenzahnrad 48a gebildet wird. Auch das kraftflussmäßig vorangehende erste Zahnrad 47 ist mit einem zweiten Zahnrad 47a zu einem Zwillingszahnrad vervollständigt.

In Fig. 11 ist die symmetrische Ausführungsform des Schubkettenantriebs in einer Hälfte eines in Längsrichtung geteilten Kettenantriebsgehäuses 50 dargestellt. Aus Fig. 11 ist auch ersichtlich, wie das Kettenrad 28 einen Schubkettenabschnitt 51 eng anliegend aus dem Kettenantriebsgehäuse 50 umlenkt.

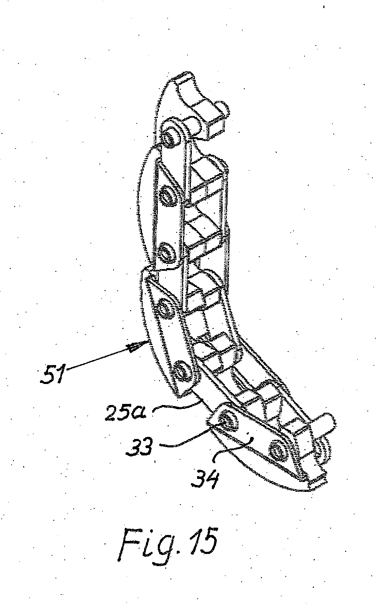

In Fig. 15 ist dieser Schubkettenabschnitt 51 noch deutlicher freigestellt. Insbesondere stabilisiert die darin gezeigte Kettenwinkellasche 34 die Schubkette 51 gegen Durchknicken nach vorne.

### Bezugszeichenliste

- 1: Kettenglieder
- 2: Kettenglieder
- 3: Kettenglieder
- 4: Kettenglieder
- 5: Kettenglieder
- 6: Kettenglieder
- 7: Scheibenpaket
- 8: Scheibenpaket
- 9: Scheibenpaket
- 10: Scheibenpaket
- 11: Scheibenpaket
- 12: Scheibenpaket
- 13: Scheibe
- 14: Außenrand
- 15: Rastnocken
- 16: Rastvertiefung
- 17: Innenrand
- 18: zahnförmiger Vorsprung
- 19: zahnförmiger Vorsprung
- 20: Einbuchtung
- 21: Bolzenaufnahmeloch
- 22: Bolzenaufnahmeloch
- 23: -
- 24: -
- 25: Kettenzuganker
- 25a, b: Kettenzuganker
- 25c: Endabschnitt des Kettenzugankers
- 25d: Endabschnitt des Kettenzugankers
- 25e: Bolzenaufnahmeloch
- 25f: Bolzenaufnahmeloch
- 26: Kettenrad
- 27: Zahn
- 28: Kettenrad
- 29: Rolle
- 30: Rolle
- 31: Rolle
- 32: Bolzen
- 33: Bolzen
- 33a: Bolzen
- 33b: Bolzen
- 34: Kettenwinkellasche
- 35: Kettenwinkellasche
- 36: Kettenwinkellasche
- 37: Kettenwinkellasche
- 38: Kettenwinkellasche
- 39: Kettenwinkellasche
- 40: abgewinkelter Steg
- 41: Elektromotor
- 42: Evoloid Ritzel
- 43: Evoloid Zahnrad
- 44: Schnecke
- 45: Schneckenrad
- 46: Ritzel
- 47: Zahnrad (erstes)
- 47a: Zahnrad (zweites)
- 48: Zwischenrad (erstes)
- 48a: Zwischenrad (zweites)
- 49: Zahnrad (erstes)
- 49a: Zahnrad (zweites)
- 50: Kettenantriebsgehäuse
- 51: Schubkettenabschnitt

## Patentansprüche

1. Mit einem Kettenantrieb betätigbare rückensteife Schubkette bestehend aus sandwichartig zusammengesetzten Kettengliedern (1-6), deren Innenteil jeweils ein Scheibenpaket (7-12) aus wenigstens zwei formgleichen, bündig angeordneten Scheiben (13) aufweist, von denen jede im Wesentlichen als Kreisscheibensegment mit einem kreisabschnittsförmigen, von einem spitzen Rastnocken (15) und einer kongruenten Rastvertiefung (16) begrenzten Außenrand (14) und einem eingebuchteten Innenrand (17) geformt ist, wobei zwischen dem Außenrand (14) und dem Innenrand (17) neben dessen Einbuchtung (20) zwei Bolzenaufnahmelöcher (21, 22) angeordnet sind, wobei das Scheibenpaket (z. B. 7) durch zwei von den beiden Bolzenaufnahmelöchern (21, 22) aufgenommenen Bolzen (32, 33) zusammengehalten wird und wobei jeder der beiden Bolzen (32, 33) außerdem geeignet ist, in jeweils ein Bolzenaufnahmeloch in zu den Scheiben des Scheibenpakets (7) formgleichen, bündig angeordneten Scheiben eines seitlich benachbarten Scheibenpakets (z. B. 8) einzugreifen, das um den Bolzen (33) schwenkbar ist, **dadurch gekennzeichnet, dass** über an zwei benachbarten Endabschnitten von zwei aufeinanderfolgenden Kettenzugankern (25a, 25b) wenigstens an einer Längsseite der Schubkette eine Kettenwinkellasche (35) mit einem abgewinkelten Steg (40) angeordnet ist, die mittels der Bolzen (33a, 33b) in den Kettenzugankern (25a, 25b) so gehalten ist, dass sich bei gestreckter Schubkette Rücken der Kettenzuganker (25a, 25b) an dem Steg (40) der Kettenwinkellasche (35) abstützen..

2. Schubkette nach Anspruch 1 **dadurch gekennzeichnet, dass** der Außenrand (14) und der eingebuchtete Innenrand (17) der Scheiben (13) jeweils zwei zahnförmige, nach innen gerichtete Vorsprünge (18, 19) mit Evolventenkontur einschließen, in denen jeweils eines der Bolzenaufnahmelöcher (21, 22) ausgeformt ist.

3. Schubkette nach Anspruch 1 oder 2, **dadurch gekennzeichnet, dass** die Rastvertiefungen (16) jeweils an einem Ende des Außenrands (14) der Scheiben (13) eines Scheibenpakets einen spitzen Rastnocken (15) der Scheiben (13) eines fluchtend benachbarten Scheibenpakets aufnehmen.

4. Schubkette nach Anspruch 3, **dadurch gekennzeichnet, dass** die spitzen Rastnocken (15) an den Außenrändern (14) der Scheiben (13) eines Scheibenpakets in Seitenansicht dreieckförmig sind und die kongruenten Rastvertiefungen (16) jeweils V-förmig.

5. Schubkette nach einem der Ansprüche 1 bis 3, **dadurch gekennzeichnet, dass** die Scheibenpakete (7, 8) aufeinanderfolgender Kettenglieder (1, 2) abwechselnd an einer ersten Längsseite und an einer dieser gegenüberliegenden zweiten Längsseite der Schubkette angeordnet sind und dass die in dieser Weise seitlich versetzt angeordneten Scheibenpakete (7, 8) sich an deren Endabschnitten überlappen und mittels jeweils eines gemeinsamen Bolzens (33) um diesen schwenkbar miteinander verbunden sind.

6. Schubkette nach Anspruch 5, **dadurch gekennzeichnet, dass** jeweils zwei an einer der Längsseiten der Schubkette aufeinander folgende Endabschnitte benachbarter Scheibenpakete (7, 9) über jeweils einen laschenförmigen Kettenzuganker (25a) schwenkbar um die Bolzen (33, 33a) durch die aufeinander folgenden Endabschnitte (25c, 25d) miteinander verbunden sind.

7. Schubkette nach Anspruch 6, **dadurch gekennzeichnet, dass** der Kettenzuganker als flache Lasche mit zwei abgerundeten Endabschnitten (25c, 25d) ausgebildet ist, in denen jeweils ein Bolzenaufnahmeloch (25e, 25f) ausgeformt ist, das mit einer Reihe Bolzenaufnahmelöcher des Scheibenpakets (z. B. 7) fluchtet.

## Claims

1. A back-rigid push chain operable by a chain drive, consisting of chain links (1-6) composed in a sandwich-like manner, whose inner part includes in each case a disk package (7-12) consisting of at least two disks (13) of identical shape and flushly arranged, each of them being formed substantially as a segment of a circular disk with a segment-shaped outer edge (14) defined by a pointed catch cam (15) and a congruent catch recess (16) and an indented inner edge (17), wherein two pin-receiving holes (21, 22) are arranged between the outer edge (14) and the inner edge (17) next to the latter's indentation (20), wherein the disk package (e.g. 7) is held together by two pins (32, 33) received in the two pin-receiving holes (21, 22) and wherein each of the two pins (32, 33) is, furthermore, suited to engage into one pin-receiving hole each in disks of a laterally adjacent disk package (e.g. 8) of identical shape as the disks of the disk package (7) and flushly arranged, which disk package (7) is pivotable about the pin (33), **characterized in that** an angular chain link (35) with an angled web (40) is arranged on two adjacent end sections of two successive chain tie rods (25a, 25b) at least on one longitudinal side of the push chain, which angular chain link (35) is held in the chain tie rods (25a, 25b) by means of the pins (33a, 33b) in such a manner that, when the push chain is expanded, backs of the chain tie rods (25a, 25b) are supported by the web (40) of the angular chain link (35).

2. The push chain of claim 1, **characterized in that** the outer edge (14) and the indented inner edge (17) of the disks (13) inclose in each case two tooth-shaped projections (18, 19) facing inwardly and having an involute profile, in each of which one of the pin-receiving holes (21, 22) is formed.

3. The push chain of claim 1 or 2, **characterized in that** the catch recesses (16) receive in each case on one end of the outer edge (14) of the disks (13) of a disk package a pointed catch cam (15) of the disks (13) of a flushly adjacent disk package.

4. The push chain of claim 3, **characterized in that** the pointed catch cam (15) on the outer edges (14) of the disks (13) of a disk package are triangular and the congruent catch recesses (16) are V-shaped, in lateral view.

5. The push chain of any of claims 1 bis 3, **characterized in that** the disk packages (7, 8) of successive chain links (1, 2) are alternately arranged on a first longitudinal side and on a second longitudinal side opposite thereto, of the push chain, and **in that** the disk packages (7, 8) arranged in this way with a lateral offset overlap on their end sections and are connected to each other by means of a common pin (33) so as to be pivotable thereabout.

6. The push chain of claim 5, **characterized in that** in each case two end sections of adjacent disk packages (7, 9), succeeding each other on one of the longitudinal sides of the push chain, are connected to each other in each case via a lug-shaped chain tie rod (25a) so as to be pivotable about the pins (33, 33a) passing through the successive end sections (25c, 25d).

7. The push chain of claim 6, **characterized in that** the chain tie rod is configured as a flat lug with two rounded end sections (25c, 25d), in each of which one pin-receiving hole (25e, 25f) is formed which is flush with a row of pin-receiving holes of the disk packages (e.g. 7).

## Revendications

1. Chaîne de poussée à dos rigide, pouvant être actionnée par un entraînement par chaîne, se composant de maillons de chaîne (1-6) composés en sandwich, dont la partie intérieure comprend à chaque fois un paquet de disques (7-12) se composant d'au moins deux disques (13) de forme identique et disposés à fleur, chacun d'eux étant formé essentiellement comme un segment d'un disque circulaire avec un bord extérieur (14) en forme de segment, défini par une came d'enclenchement (15) pointue et un évidement d'enclenchement (16) congruente, et un bord intérieur (17) indenté dans laquelle deux trous de positionnement de boulon (21, 22) sont disposés entre le bord extérieur (14) et le bord intérieur (17) à côté de l'indentation (20) de ce dernier, dans laquelle le paquet de disques (p.ex. 7) est tenue ensemble par deux boulons (32, 33) reçues dans les deux trous de positionnement de boulon (21, 22), et dans laquelle chacun des deux boulons (32, 33) est en outre approprié à s'engrener dans un trou de positionnement de boulon dans des disques d'un paquet de disques (p.ex. 8) latéralement adjacent, de forme identique à celle des disques du paquet de disques (7) et disposés à fleur, dit paquet de disques (7) étant pivotant autour du boulon (33), **caractérisée en ce qu'**un attache équerre de la chaîne (35) ayant un étançon coudé (40) est disposé à deux parties terminales adjacentes de deux tirants de chaîne (25a, 25b) successifs, au moins sur un côté longitudinale de la chaîne de poussée, dit attache équerre de la chaîne (35) étant tenu dans les tirants de chaîne (25a, 25b) au moyen des boulons (33a, 33b) de façon que, lorsque la chaîne de poussée est étendue, des dos des tirants de chaîne (25a, 25b) sont appuyés par l'étançon (40) de l'attache équerre de la chaîne (35).

2. Chaîne de poussée selon la revendication 1, **caractérisée en ce que** le bord extérieur (14) et le bord intérieur (17) indenté des disques (13) incluent à chaque fois deux parties en saillie (18, 19) dentiformes en regard de l'intérieur, ayant un profil de développante, dans chacune d'elles un des trous de positionnement de boulon (21, 22) est formé.

3. Chaîne de poussée selon la revendication 1 or 2, **caractérisée en ce que** les évidements d'enclenchement (16) reçoivent à chaque fois sur un bout du bord extérieur (14) des disques (13) d'un paquet de disques une came d'enclenchement (15) pointue des disques (13) d'un paquet de disques adjacent à fleur.

4. Chaîne de poussée selon la revendication 3, **caractérisée en ce que** la came d'enclenchement (15) pointue aux bords extérieurs (14) des disques (13) d'un paquet de disques sont triangulaires est que les évidements d'enclenchement (16) congruents sont en forme de V, vu de côté.

5. Chaîne de poussée selon l'une quelconque des revendications 1 à 3, **caractérisée en ce que** les paquets de disques (7, 8) de maillons de chaîne (1, 2) successifs sont disposés alternativement sur un premier côté longitudinal et sur un deuxième côté longitudinal opposé de la chaîne de poussée, et **en ce que** les paquets de disques (7, 8) disposés de cette manière avec un décalage lateral se chevauchent à leurs parties terminales et sont reliés l'un à l'autre au moyen d'un boulon (33) commun de façon à ce qu'ils soient pivotants autour de ce dernier.

6. Chaîne de poussée selon la revendication 5, **caractérisée en ce que**, à chaque fois, deux parties terminales de paquets de disques (7, 9) adjacents se succédant l'une à l'autre sur l'un des côtés longitudinaux de la chaîne de poussée sont reliées l'une à l'autre, à chaque fois, au moyen d'un tirant de chaîne (25a) en forme d'attache, de façon à ce qu'ils soient pivotants autour les boulons (33, 33a) qui passent au travers des parties terminales (25c, 25d) successives.

7. Chaîne de poussée selon la revendication 6, **caractérisée en ce que** le tirant de chaîne est configuré comme un attache plat avec deux parties terminales (25c, 25d) arrondies, un trou de positionnement de boulon (25e, 25f) étant formé dans chacune d'elles qui est à fleur avec une rangée de trous de positionnement de boulon du paquet de disques (p.ex. 7).
